# FASCICULE DE BREVET EUROPEEN

(11) **EP 2 106 430 B1**
(45) Date de publication et mention de la délivrance du brevet: **08.05.2013**
(21) Numéro de dépôt: 07871807.9
(22) Date de dépôt: 07.12.2007
(51) Int. Cl.: C10G 3/00, C10G 45/08, C10G 65/04

(54) **PROCÉDÉS D'HYDROTRAITEMENT D'UN MÉLANGE CONSTITUÉ D'HUILES D'ORIGINE ANIMALE OU VÉGÉTALE ET DE COUPES PÉTROLIÈRES AVEC STRIPAGE INTERMÉDIAIRE**
VERFAHREN ZUR HYDRIERBEHANDLUNG EINES PFLANZLICHE ODER TIERISCHE ÖLE UND ERDÖLSCHNITTE ENTHALTENDEN GEMISCHS MIT INTERMEDIÄREM STRIPPEN
METHOD FOR HYDRO-PROCESSING A MIXTURE CONTAINING ANIMAL OR VEGETAL OILS AND PETROLEUM CUTS BY INTERMEDIATE STRIPPING

(30) Priorité: 22.12.2006 FR 0611409
(43) Date de publication de la demande: 07.10.2009
(73) Titulaire: IFP Energies nouvelles, 92852 Rueil-Malmaison Cedex (FR)
(72) Inventeur: BERTONCINI, Fabrice, F-69007 Lyon (FR); MARCHAND, Karin, F-69008 Lyon (FR)
(86) Numéro de dépôt international: PCT/FR2007/002012
(87) Numéro de publication internationale: WO 2008/084145

(56) Documents cités:
- EP-A- 1 693 432
- EP-A2- 1 396 531
- US-A- 4 992 605

## Description

### DOMAINE DE L'INVENTION

La présente invention concerne des procédés d'hydrotraitement d'une charge constituée d'un mélange d'huiles d'origine végétale ou animale combinées avec des coupes pétrolières visant à produire des bases carburants gazoles.

### ETAT DE L'ART ANTÉRIEUR

Dans un contexte international marqué par la croissance rapide en besoin de carburants, en particulier de bases gazoles dans la communauté européenne, la recherche de nouvelles sources d'énergie renouvelables pouvant être intégrées au schéma traditionnel du raffinage et de la production de carburants constitue un enjeu majeur.

A ce titre, l'intégration dans le processus de raffinage de nouveaux produits d'origine végétale ou animale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétrollers dans les pools carburants. En outre, les procédés connus à ce jour utilisant des huiles végétales ou des graisses animales sont à l'origine d'émissions importantes de CO₂, connues pour ces effets négatifs sur l'environnement. Une meilleure utilisation de ces bio-ressources, comme par exemple leur intégration dans le pool carburant présenterait donc un avantage certain.

La production de bases carburants est de plus en plus identifiée comme un nouveau débouché attractif par le monde agricole, et ce tout particulièrement pour les producteurs d'huiles végétales, Issues du broyage de graines oléagineuses comme le colza, le soja, ou le tournesol, En effet, ces huiles végétales sont constituées d'acides gras sous forme de triglycérides, ayant de longues chaînes alkyles dont la structure correspond aux paraffines normales des coupes gazoles (longueur de chaîne de 12 à 24 atomes de carbone, selon la nature de l'huile végétale). Inadaptées à l'alimentation directe des moteurs diesels modernes, ces huiles végétales doivent être préalablement transformées.

Une des approches existantes repose sur la réaction de transestérification avec un alcool comme le méthanol condulsant aux esters méthyliques d'huiles végétales (EMHV) couramment appelés biodiesel. Cette vole est aujourd'hui largement employée en Europe puisque la production d'EMHV a augmenté de manière très Importante au cours des dix dernières années, pour atteindre 1,5 Mt en 2003 (le taux de croissance annuel moyen est de 35 % entre 1992 et 2003). Cette production est notamment soutenue par la directive européenne sur la promotion des biocarburants (2003/30/CE) qui fixe des objectifs croissants de consommation en biocarburants dans le domaine des transports. Ces consommations devront représenter au minimum 2 % en 2005, 5,75 % en 2010 et 8 % (pourcentages mesurés en énergie) en 2015 des consommations globales d'essence et de gazole utilisés dans les transports. Cependant, ce type de procédé est relativement coûteux et nécessite de limiter le type d'huiles végétales afin de respecter les spécifications du biodiesel. En outre, les charges pour ce type de procédé doivent être soigneusement sélectionnées, si bien qu'un certain nombre d'huiles végétales ne peuvent être traitées de cette manière. Enfin, les propriétés à froid de ces produits constituent également un facteur limitant.

Une autre approche consiste à exploiter directement les huiles végétales via leur transformation en dérivés d'acides gras élémentaires, grâce à des procédés d'hydro-raffinage ou d'hydroconversion dont les catalyseurs sont également bien connus de l'homme de l'art pour leurs propriétés d'hydrodéoxygénation [E. Laurent, B. Delmon, Appl. Catal. A 109 (1) 1994 77-96 et 97-115]. Dans ce cas, les triglycérides sont convertis en dérivés principalement paraffiniques et saturés, constituant alors d'excellentes bases pour le pool gazole du fait de leurs bons indices de cétane.

Il existe donc un fort besoin de l'Industrie du raffinage du pétrole pour traiter les huiles d'origine végétale ou animale, si possible au moindre coût et en tenant compte des unités existantes.

Plusieurs brevets couvrent ces domaines d'intérêt.

Le brevet US 5,233,109 décrit la mise en oeuvre de craquage thermique ou catalytique d'huiles végétales conduisant à une large gamme de produits comme des paraffines mais aussi des dérivés aromatiques et des dérivés insaturés dans la gamme d'ébullition des essences et des gazoles. Ce procédé produit des dérivés non directement valorisables comme bases carburants gazoles et particulièrement pénalisant pour le respect des spécifications d'usage (stabilité à l'oxydation).

Les brevets US 4,992,605 et US 5,705,722 décrivent des procédés de production de bases pour le pool gazole produites à partir de la transformation directe d'huiles végétales (colza, palme, soja, tournesol) ou de biomasse lignocellulosique en hydrocarbures saturés après hydrotraitement ou hydroraffinage de ces produits seuls.

Les procédés de conversion décrits sont opérés à des pressions comprises entre 0,48 et 1,52 MPa et à des températures comprises entre 350 à 450°C permettant d'obtenir des produits à haut indice de cétane. Les additifs pro-cétane ainsi obtenus sont mélangés au gazole à des teneurs de 5 à 30% en volume.

Ces deux brevets présentent comme inconvénient majeur une consommation d'hydrogène élevée due aux réactions de méthanisation ou de déplacement du gaz à l'eau ("water-gas shift réaction"). En outre, l'oxygène contenu dans les triglycérides est généralement décomposé par hydrodéoxygénation en présence de catalyseur d'hydrotraitement, ce qui est coûteux en hydrogène.

A ce titre, le brevet EP 1,681,337 constitue une amélioration puisqu'il propose un procédé n'employant que de faibles quantités d'hydrogène. Il s'agit d'un procédé de décarboxylation / décarbonylation sur catalyseurs du groupe VIII préalablement réduit à une température comprise entre 100 et 500°C. Les réactions sont ensuite réalisées à une température comprise entre 200 et 400°C à une pression comprise entre 1 et 15 MPa. Dans ce cas, la réaction de décarboxylation / décarbonylation produit des hydrocarbures saturés et du CO₂ ou du CO, respectivement. L'hydrogène n'est plus nécessaire, hormis pour conserver la phase catalytique sous forme métallique et/ou préserver le catalyseur d'une désactivation trop rapide.

Les produits formés ne sont pas directement exploités comme base carburant en raison de très mauvaises propriétés à froid.

Pour contourner ces limitations sur les propriétés de tenue à froid, d'autres brevets décrivent l'enchaînement d'une étape d'hydrogénation et d'isomérisation des huiles végétales, afin de pouvoir obtenir un mélange d'hydrocarbures saturés ramifiés, dont les propriétés de tenue à froid sont connues comme étant supérieures à celles des mêmes composés non ramifiés. Le brevet F1 100248 porte sur l'hydrogénation des acides gras ou des triglycérides en n-paraffines, suivie d'une étape d'isomérisation. Le brevet EP 1,396,531 décrit un procédé d'hydrotraitement pour réaliser l'hydrodéoxygénation sous une pression de 5 à 10 MPa et une température de 300 à 600°C, suivie d'une étape d'isomérisation sous une pression de 2 à 10 MPa et une température de 300 à 400°C.

Enfin, le brevet EP 1,693,432 décrit un procédé permettant l'hydroconversion d'un mélange d'huiles végétales (de 1% à 75% vol.) et d'hydrocarbures (de 99 % à 25 % vol.) dans un seul réacteur d'hydrotraitement, sous une pression de 4 MPa à 10 MPa, avec un lit catalytique de type NiMo ou CoMo opéré à une température comprise entre 320°C et 400°C, L'intérêt de cette approche est le gain en terme d'indice de cétane et de diminution de densité apportés par le mélange avec l'huile végétale par rapport aux propriétés obtenues par traitement direct de la base pétrolière. En outre, le mélange des charges hydrocarbonées avec les huiles végétales permet d'améliorer les propriétés à froid des effluents obtenus par rapport à ceux qui seraient obtenus par un traitement des huiles végétales seules. Les catalyseurs d'hydrotraitement utilisés sont des sulfures de métaux de transition du groupe VIB promus par des métaux du groupe VIII. La présence de composés issus de coupe pétrolière non désulfurée permet d'assurer une pression partielle en H₂S supérieure à la pression partielle minimale nécessaire à la stabilité du catalyseur.

L'inconvénient de ce procédé réside dans la mise en oeuvre d'une seule étape pour le co-traitement de l'huile végétale et de la base pétrolière. En effet, ceci est limitant pour la mise en opérations optimales des catalyseurs d'hydrotraitement, qui doivent opérer les réactions de décarboxylation-décarbonylation et d'hydrodéoxygénation et d'hydrodésulfuration simultanément. Or, les conditions opératoires qui permettent de favoriser les réactions de décarboxylation et décarbonylation et une consommation moindre d'hydrogène par rapport à l'hydrodéoxygénation sont plus douces que celles nécessaires pour obtenir les spécifications souhaitées en soufre effluent.

En outre, l'activité et la stabilité du catalyseur tel qu'utilisé dans ce brevet sont pénalisées en raison de la formation des co-produits des réactions de d'hydrodéoxygénation et de décarboxylation et/ou décarbonylation que sont respectivement l'eau, et le CO et/ou de CO₂. Ces molécules sont en effet bien connues de l'homme de l'art pour leur effet respectivement de désactivation et d'inhibition sur les catalyseurs d'hydrotraitement (US 2003/0221994),

Il serait donc intéressant de pouvoir s'affranchir de ces coproduits de façon à permettre une meilleure activité du catalyseur en limitant la présence d'inhibiteurs et une plus grande durée de cycle de l'unité (stabilité du catalyseur en limitant les effets néfaste dus à la présence d'eau). Le co-traitement de la base pétrolière et de l'huile végétale conduit donc au vieillissement rapide des catalyseurs et à une dégradation des performances d'hydrodésulfuration des catalyseurs. En particulier, il n'est pas fait mention dans ce brevet de performance d'hydrodésulfuration du procédé et de la qualité des produits formés vis-à-vis de l'ensemble des spécifications d'usage des carburants gazoles. Compte-tenu du coup des opérations de chargement, déchargement, du prix des matières premières des catalyseurs et de leur recyclage, il paraît important pour les raffineurs de maximiser la durée de cycle de l'unité et par conséquent le temps de vie du catalyseur d'hydrotraitement permettant d'obtenir des gazoles aux spécifications.

L'orientation du mécanisme de transformation des huiles végétales (vole hydrodéoxygénation ou voie décarboxylation / décarbonylation) est rendue difficile dans les conditions opératoires requises pour réaliser l'hydrodésulfuration de la base gazoles. Or, cette orientation est très importante en terme de consommation d'hydrogène. En effet, il n'est pas étranger à l'homme de l'art que la consommation d'hydrogène reste un paramètre critique, compte-tenu de sa faible disponibilité dans les raffineries. Il est donc important de minimiser sa consommation. Le fait que les conditions opératoires optimales diffèrent pour les réactions recherchées est donc grandement limitant dans le cas du co-traitement des huiles végétales et pétrolières réalisé en une seule étape.

Il existe donc un besoin industriel et environnemental fort pour améliorer les conditions de co-traitement d'huiles d'origine végétale ou animale et de bases pétrolières afin de produire des carburants gazoles.

L'utilisation d'un stripage intermédiaire entre deux sections réactionnelles est décrite notamment dans la demande de brevet WO 2003/044131A1 déposée au nom de la Demanderesse. Dans ce procédé, l'hydrogène est introduit en excès sur le premier réacteur d'hydrotraitement pour convertir en H₂S la plus grande partie des composés soufrés contenus dans la charge. Après séparation et rectification, seule la partie liquide ayant une quantité limitée de soufre est envoyée à la seconde unité d'hydrotraitement. L'intérêt de ce procédé est donc de limiter l'effet d'inhibition dû à la présence d'H₂S sur le second lit catalytique. Le premier réacteur réalise la plus grande partie de la conversion tandis que le second agit comme un réacteur de finition. L'introduction d'un second réacteur et d'un stripage intermédiaire ne permet donc pas d'effectuer des réactions différentes sur les unités et n'occasionne pas une réduction de la consommation en hydrogène.

### RÉSUMÉ DE L'INVENTION

L'invention porte sur un procédé d'hydrotraitement selon la revendication 1 mettant en oeuvre deux unités (HDT1 et HDS2) en série avec un stripage intermédiaire (103) permettant de co-traiter un mélange formé de 1 à 99% vol d'huiles d'origine végétale ou animale et de 99% à 1% vol de bases pétrolières provenant de la distillation ou d'unité de conversion en vue de produire des bases carburants gazoles directement aux spécifications, notamment en terme de teneur en soufre, densité et propriétés de tenue à froid.

Avantageusement, la mise en oeuvre du procédé de la présente invention permet de réduire le coût du traitement des huiles d'origine végétale ou animale pour l'obtention de gazoles aux spécifications par rapport à une unité spécifiquement dédiée à ce type d'huiles comme par exemple une unité de transestérification, en incorporant leur traitement dans un schéma de raffinerie existant avec une unité d'hydrodésulfuration existante (HDS2), tout en limitant la consommation d'hydrogène par rapport à un schéma en co-traitement du mélange en une seule étape.

Elle permet également l'utilisation d'une gamme plus large d'huiles d'origine végétale ou animale.

L'activité et la stabilité du catalyseur d'hydrotraitement des distillats utilisé dans l'unité d'hydrodésulfuration (HDS2) sont améliorées grâce à l'utilisation d'une nouvelle unité de prétraitement (HDT1) du mélange huiles d'origine végétale ou animale et coupe pétrolière en amont de l'unité d'hydrodésulfuration ainsi que d'un stripage intermédiaire (103).

### DESCRIPTION DES DESSINS

La Figure 1 représente un schéma de procédé conforme à l'invention.
La Figure 2 représente la variation d'indice de cétane calculé en fonction de la teneur en huiles végétales en co-métange avec un gazole pétrolier, pour différentes huiles.
La Figure 3 représente le gain en indice de cétane en fonction de la proportion et du type d'huile végétale introduit dans le mélange.

### DESCRIPTION DETAILLEE DE L'INVENTION

Le procédé de la présente invention est un procédé d'hydrotraitement mettant en oeuvre deux unités HDT1 et HDS2 en série avec un stripage intermédiaire, dans le but de co-traiter une charge constituée d'un mélange constitué de 1 à 99% en volume d'huiles d'origine végétale ou animale et de 99 à 1% en volume de bases pétrolières (respectivement). Le produit obtenu après le co-traitement répond au moins aux spécifications soufre 2005 imposées et donc contient moins de 50 mg/kg de soufre, de préférence moins de 10 mg/kg de soufre : il peut être directement utilisé comme base carburant gazole.

Avantageusement, le mélange est constitué de 1 à 50% d'huiles d'origine animale ou végétale et de 99 à 50 % de bases pétrolières.

Lors de l'hydrotraitement (HDT), les réactions subies par la charge sont les suivantes:
- la réaction de décarbonylation représente l'ensemble des réactions permettant d'enlever un oxygène et un carbone d'un groupement carboxylique en formant du monoxyde de carbone.
- la réaction de décarboxylation représente l'ensemble des réactions permettant d'enlever un groupement carboxyle d'un groupement carboxylique en formant du dioxyde de carbone,
- la réaction d'hydrodéoxygénation correspond aux réactions aboutissant à la formation d'eau en présence d'hydrogène.

Par hydrodésulfuration (HDS), on désigne les réactions permettant d'enlever le soufre de la charge pétrolière avec production d'H₂S.

Par hydrodéazotation (HDN), on désigne les réactions permettant d'enlever l'azote de la charge pétrolière avec production de NH₃.

Chaque étape peut comprendre un ou plusieurs réacteurs, une ou plusieurs zones (ou lits) catalytiques, et utiliser des catalyseurs identiques ou différents. Il est ainsi possible d'adapter les conditions de traitement dans chacune des unités et/ou zones. Ainsi l'hydrotraitement du mélange d'huiles d'origine végétale ou animale et d'hydrocarbures peut s'effectuer à plus basse température et moindre pression que l'hydrodésulfuration ultime.

Un autre intérêt du procédé selon invention est d'offrir un gain économique vis-à-vis des procédés opérant en une seule étape (conditions d'hydrotraitement doux, élimination des inhibiteurs d'hydrodésulfuration profonde) ainsi qu'une plus grande latitude d'opération du procédé en terme d'association de système catalytique pour le premier et le second lit.

En particulier, l'orientation du mécanisme de transformation des huiles d'origine végétale ou animale lors de la première étape d'hydrotraitement HDT₁ peut être contrôlée : cette transformation peut se faire soit par la vole hydrodéoxygénation fortement consommatrice en hydrogène soit par la voie décarboxylation et/ou décarbonylation. Cette orientation est donc importante non seulement en terme de consommation d'hydrogène mais également en terme de CO₂ produit. En effet, dans le cadre du meilleur respect de l'environnement, les émissions en CO₂ doivent désormais être restreintes.

Le stripage intermédiaire (103) permet de s'affranchir de la présence de monoxyde de carbone (CO), de dioxyde de carbone (CO₂), et d'eau (H₂O), issus de l'hydrotraitement des triglycérides constituant l'huile d'origine végétale ou animale sur le premier lit catalytique (HDT1), avant l'étape de désulfuration ultime (HDS2). Ces composés étant connus pour leurs effets de désactivation et/ou inhibition, le stripage permet d'obtenir une meilleure activité du catalyseur utilisé lors de l'étape de désulfuration HDS2. De plus, la présence de ces composés, par effet de dilution diminuait la pression partielle en hydrogène de l'unité HDT1 par rapport à ce qu'elle aurait pu être sans les réactions de décarbonylation, décarboxylation et d'hydrodéoxygénation. Le stripage intermédiaire permet donc de ne pas pénaliser l'activité et la stabilité du catalyseur de l'unité d'HDS2 sur ce point. Enfin, cette seconde étape est ainsi d'autant plus facilitée, que le stripage permet également d'éliminer le sulfure d'hydrogène (H₂S) et l'ammoniaque (NH₃), également formés par la première étape d'hydrotraitement de la charge au cours de laquelle ont lieu des réactions d'hydrodésulfuration, hydrogénation puis hydrodéazotation des composés provenant de l'huile pétrolière.

Le ratio initial entre l'huile d'origine végétale ou animale et la base pétrolière est réglé par l'exploitant afin d'atteindre, après seconde étape, un carburant aux spécifications d'usage en fonction des teneurs en soufre visées et des propriétés d'usage en combinant le gain en terme d'indice de cétane et de baisse de la densité et la dégradation de la tenue à froid.

Enfin, le procédé selon l'invention offre l'éventuelle possibilité, afin de limiter l'inhibition du système catalytique en première étape HDT1 générée par la production de CO, d'opérer le premier réacteur à contre-courant pour l'introduction d'hydrogène. En effet, le procédé étant en lit fixe, il existe un gradient de concentration des gaz produits vers le bas du réacteur. L'introduction d'hydrogène à contre-courant permet d'une part la dilution de ces poisons et d'autre part une meilleure activité du catalyseur en augmentant le ratio H₂/HC à l'endroit où la concentration en inhibiteurs est la plus importante.

Les charges utilisées d'une part sont composées de corps gras, donc correspondent à une substance naturelle ou élaborée, d'origine animale ou végétale, contenant principalement des triglycérides. Ceci regroupe essentiellement les huiles issues de ressources renouvelables telles que les graisses et les huiles provenant des ressources végétales et animales (comme le saindoux, le suif, les graisses de volaille, les graisses d'os, les huiles de poissons et les matières grasses d'origine laitière) ainsi que les composés et les mélanges qui en sont dérivés, comme les acides gras ou les esters d'alkyle d'acides gras. Les produits Issus du recyclage des graisses animales et des huiles végétales de l'industrie alimentaire sont également utilisables, purs ou en mélanges avec d'autres classes de constituants précédemment décrites.

Les charges préférées sont les huiles végétales issues des graines oléagineuses comme les huiles de colza, de colza érucique, de soja, de tournesol, de palme, de coprah, de palmiste, d'arachide, d'olive, de maïs, de beurre de cacao, de noix, de lin ainsi que de tout autre végétal. Ces huiles végétales sont constituées très majoritairement d'acides gras sous forme de triglycérides (généralement à plus de 97 % poids), ayant de longues chaînes alkyles variant de 8 à 24 atomes de carbone comme les acides gras butyrique, caproïque, caprylique, caprique, laurique, myristique, palmitique, palmitoléique, stéarique, oléique, linoléique, linolénique, arachidique, gadoléique, éicosapentaénoïque (EPA), béhénique, érucique, docosahexaéoïque (DHA) et lignocérique.

Les dérivés de sels d'acides gras, d'esters d'alkyles d'acides gras ou d'acides gras libres qui peuvent être produits par hydrolyse, par fractionnement ou par transestérification par exemple des triglycérides ou des mélanges de ces huiles et de leurs dérivés entrent également dans la définition de la charge "huile d'origine végétale ou animale " au sens de la présente invention.

Les charges particulièrement préférées sont les huiles végétales de colza, de colza érucique, de soja, de tournesol ou de tournesol oléique (acides gras en C18 majoritaires), de palme (acides gras en C16 majoritaires) et de coprah et de palmiste (acides gras en C12-C14 majoritaires) ou des mélanges de ces huiles et de leurs dérivés.

D'autre part, la charge hydrocarbonée typique du procédé selon l'invention est une charge de distillats moyens. Au sens de la présente description, le terme distillat moyen désigne des fractions hydrocarbonées ayant leur point d'ébullition dans la gamme d'environ 130°C à environ 410°C, généralement d'environ 140°C à environ 375°C et par exemple d'environ 150°C à environ 370°C. Une charge de distillat moyen peut également comprendre une coupe gazole ou diesel, ou être désignée par l'une de ces appellations. Les gazoles de distillation directe ou provenant du craquage catalytique (LCO) ou d'un autre procédé de conversion (cokéfaction, viscoréduction, hydroconversion de résidu...) constituent une partie des charges typiques du procédé selon l'invention.

### Conditions opératoires

### Unité 1 : Hydroconversion douce des huiles d'origine végétale ou animale en co-mélange avec l'huile pétrolière

Les conditions opératoires appliquées dans le procédé selon l'invention sont les suivantes ; une température de 180 à 360°C (de façon préférée entre 190 et 350°C), une pression totale de 0,5 à 20 MPa (de façon préférée entre 1 et 10 MPa), une vitesse volumique horaire (définie comme le débit de volume de gaz/volume de catalyseur) de 0,1 à 20 h⁻¹ (de façon préférée entre 0,2 et 5 h⁻¹), un rapport hydrogène/charge exprimé en volume d'hydrogène, mesuré dans les conditions normales de température et pression, par volume de charge liquide généralement de 50 Nl/l à 2000 Nl/l. Cet hydrogène peut éventuellement être constitué en proportion variant de 100 à 1% volume de l'hydrogène de recycle provenant de l'unité d'hydrodésulfuration.

### Unité 2 : Hydrodésulfuration profonde

Les conditions opératoires appliquées dans ces procédés sont habituellement les suivantes : une température de 180 à 450°C (de façon préférée entre 250 et 440°C), une pression totale de 0,5 à 30 MPa (de façon préférée entre 1 et 25 MPa), une vitesse volumique horaire de 0,1 à 20 h⁻¹ (de façon préférée entre 0,2 et 4 h⁻¹), un rapport hydrogène/charge exprimé en volume d'hydrogène, mesuré dans les conditions normales de température et pression, par volume de charge liquide généralement de 50 Nl/l à 2000 Nl/l.

Le préchauffage de la charge contenant au moins la charge hydrocarbonée peut se faire par tous les moyens connus de l'homme du métier avant son introduction dans l'unité d'hydrotraitement HDT1. Sans limiter la portée de l'invention, on peut mentionner l'emploi d'échangeurs de chaleur et/ou de four de préchauffe.

Le mélange entre l'huile végétale ou animale et la charge pétrolière peut intervenir à différents endroits du schéma de procédé.

Une première possibilité consiste à injecter l'huile végétale ou animale après préchauffage de la coupe pétrolière par passage en présence d'hydrogène par un échangeur charge-effluent puis dans un four de préchauffe.

Une seconde méthode consiste à mélanger la coupe pétrolière et la charge constituée d'huile végétale en présence d'hydrogène après préchauffage de la coupe pétrolière par passage par un échangeur charge-effluent issu de la première unité HDT1. Dans ce cas, le mélange des charges pétrolières et huiles peut éventuellement être complété par passage dans un four de préchauffe.

Enfin, le mélange entre l't7ulle végétale ou animale et la coupe pétrolière peut intervenir en présence d'hydrogène avant chauffage, auquel cas, le mélange volt sa température augmentée tout d'abord par passage par un échangeur charge-effluent puis éventuellement par un four de préchauffe.

Le mélange des charges peut également être fait préalablement à l'introduction d'hydrogène ou a posteriori. De manière préférée, le mélange de l'huile végétale ou animale avec la coupe hydrocarbonée intervient en présence d'hydrogène que ce soit avant l'échangeur charge-effluent, avant le four de préchauffe ou avant l'entrée dans le réacteur. De manière très préférée, le mélange de l'huile végétale avec la coupe hydrocarbonée intervient en présence d'hydrogène après élévation de la température de la charge pétrolière par au moins une étape de chauffage.

Conformément à l'invention l'unité HDS2 opère dans des conditions plus sévères que l'unité HDT1. Il est donc nécessaire d'avoir après le stripeur un équipement permettant d'élever la température des produits issus du stripeur. Ceci peut être fait au moyen de différents équipements bien connus de l'homme du métier comme des échangeurs charge-effluent ou un four de préchauffe.

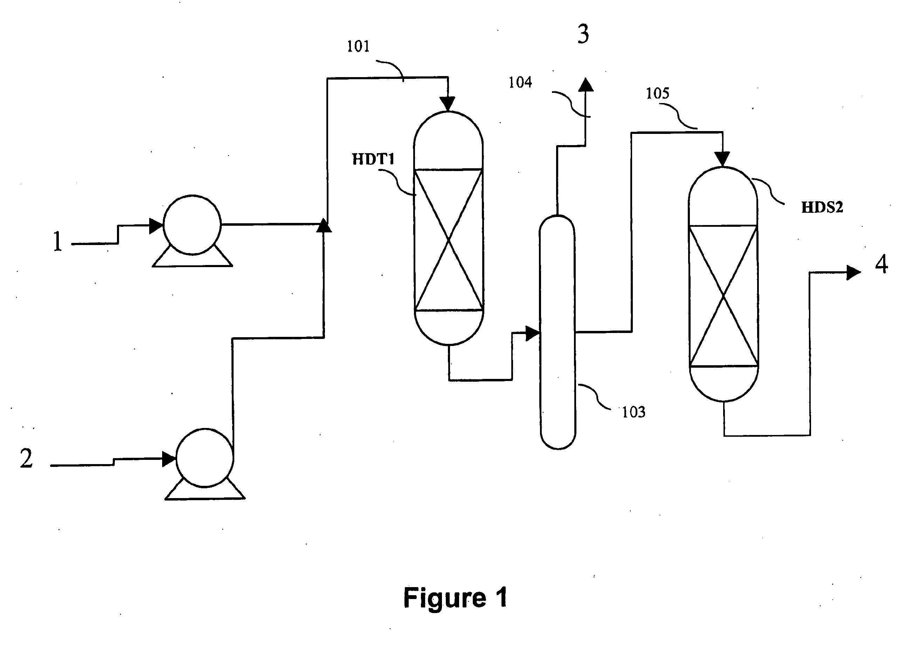

Le procédé selon l'invention va être décrit au regard de la Figure 1 représentant un schéma de procédés. Sur ce schéma, les étapes de préchauffage des charges ne sont pas représentées.

La charge huile d'origine végétale ou animale (1) est mélangée avec la coupe pétrolière (2). Le mélange est Introduit par la conduite (101) dans la première unité de traitement HDT1 (102). L'effluent sortant est ensuite directement envoyé dans le stripeur intermédiaire (103). La conduite (104) permet d'éliminer les coproduits (3) obtenus suite aux différentes réactions lors de l'hydrotraitement réalisé dans les conditions opératoires douces (H₂O, CO et/ou CO₂, ainsi que H₂S et NH₃), L'effluent récupéré après le stripage est envoyé par la conduite (105) dans la deuxième unité d'hydrotraitement HDS2 (106) dans laquelle a lieu l'hydrodésulfuration profonde. En sortie de cette unité, on récupère une base carburant gazole (4) aux spécifications.

Une spécification importante d'un carburant diesel précisé dans la norme de spécification EN590 est la valeur d'indice de cétane de 51 selon la norme ASTM D613, qui représente les propriétés d'auto-allumage du carburant en mode de fonctionnement du moteur.

Ce paramètre montre très clairement l'intérêt de ce procédé qui fournit une augmentation très notable de l'indice de cétane grâce au co-traitement en mélange d'une base pétrolière et d'une huile végétale, en fonction de la nature de l'huile végétale et de la base pétrolière.

De plus, le gain du procédé est obtenu même avec des ajouts réduits d'huiles végétales.

Le gain d'indice de cétane dépend intimement de la stabilité de la première étape d'hydrotraitement : il faut éviter le phénomène de craquage afin de conserver des dérivés paraffiniques ayant de longues chaînes alkyles.

### Catalyseurs :

Les catalyseurs d'hydrotraitement utilisés dans le cadre de invention comprennent généralement au moins un métal du groupe VIB et/ou au moins un métal du groupe VIII du tableau périodique des éléments. Les formulations les plus courantes sont de type cobalt-molybdène (CoMo), nickel-molybdène (NIMo) et nickel-tungstène (NiW).

Ces catalyseurs peuvent également être dopés grâce à des composés comme le phosphore, le bore et/ou le fluor. Ils peuvent se présenter sous forme massique ou bien à l'état supporté. Dans ce dernier cas, la matrice poreuse est généralement un oxyde amorphe ou mal cristallisé voire cristallisé.

À titre d'exemple sans limiter la portée de l'invention, les supports sont typiquement l'alumine, le charbon actif, le carbure de silicium, l'oxyde de titane.

Après préparation, lesdits catalyseurs se présentent souvent sous forme d'oxy-hydroxyde ou d'oxyde selon que l'on utilise un catalyseur séché (teneur en volatils >15 % poids pour une température de 550°C) ou un catalyseur calciné (teneur en volatils ≤15 % poids pour une température de 550°C).

Leur forme active et stable pour les procédés d'hydrotraitement étant la forme sulfurée, ces catalyseurs doivent subir une étape de sulfuration. Celle-ci peut être réalisée dans l'unité d'hydrotraitement elle-même (on parle alors de sulfuration in-situ) ou préalablement au chargement du catalyseur dans l'unité (on parle alors de sulfuration ex-situ).

Pour les deux unités, le catalyseur est sulfuré après ou avant chargement dans l'unité considérée par toute méthode connue de l'homme du métier qu'il s'agisse d'une sulfuration en phase gaz ou en phase liquide à l'aide d'un agent sulfurant incorporé à la charge. De manière préférée, le catalyseur est sulfuré in situ en phase liquide.

Les exemples qui suivent illustrent l'invention sans toutefois en limiter sa portée.

### EXEMPLES

Les exemples qui suivent précise l'invention sans toutefois en limiter sa portée.

### Exemple 1 : Procédé d'hydrotraitement en une étape d'un mélange constitué d'huiles végétales et d'une coupe pétrolière (non conforme à l'invention)

Le co-traitement d'un mélange constitué d'un gazole de distillation directe et d'une huile de colza a été réalisé dans une unité isotherme en lit fixe de type courant descendant contenant 50 cc de catalyseur de type CoMo/Al₂O₃ en chargement dense.

La charge pétrolière utilisée est un gazole de distillation directe issu de brut Moyen Orient dont les caractéristiques sont les suivantes :
- Densité à 15 °C : 0,8522
- Soufre : 1,35 % en poids
- Azote 126 mg/kg
- Distillation Simulée:
- PI : 155 °C
- 10 % poids : 247 °C
- 50 % poids : 315 °C
- 90 % poids : 392 °C
- PF : 444 °C

Après sulfuration in situ à 350 °C dans l'unité sous pression réalisée en ajoutant 2 % en poids de diméthyldisulfure à la charge gazole utilisée, l'hydrotraitement a ensuite été conduit pendant 140 h dans les conditions opératoires suivantes :
- Pression totale (MPa rel) : 4 MPa
- Température (°C) : 350
- H₂/HC (Nl/l) : 320
- VVH (h⁻¹) : 1,6

Les propriétés des effluents obtenus sont reportées dans le Tableau 1.

La charge de test a ensuite été modifiée de façon à obtenir une charge mixte contenant 5% poids d'huile de colza. On constate que la densité des produits est plus faible que celle obtenue avec une charge pétrolière non additivée d'une huile végétale. Les teneurs en soufre des effluents sont également grandement affectées par la présence de 5% poids d'huile de colza dans la charge hydrocarbonée puisque la teneur soufre effluent passe de 76 mg/kg à 400 mg/kg. Cela correspond à une désactivation de 13°C, ce qui signifie qu'en présence de 5% poids d'huile de colza dans la charge, il faudrait opérer l'unité 13°C plus haut pour avoir la teneur en soufre des effluents de 76 mg/kg. Cette tendance se confirme lorsque la proportion "huile de colza/gazole de distillation directe" de la charge est augmentée. En effet, comme le montre le Tableau 1, pour 15 % poids d'huile de colza dans la charge, la teneur en soufre des effluents est de 582 mg/kg ce qui correspond à une désactivation de 16°C.

Ainsi, le co-traitement d'un gazole de distillation directe avec une huile végétale est fortement pénalisant pour l'activité du catalyseur d'hydrotraitement et pour l'obtention des spécifications soufre requises.

La même remarque s'applique pour les teneurs en azote des effluents.

Par ailleurs, la consommation en hydrogène a été mesurée pour le co-traitement en une seule étape de gazole de distillation directe et pour un mélange en proportion variable d'huile de colza. Comme le montre le Tableau 1, la consommation d'hydrogène augmente d'environ 35 % par rapport à la consommation d'hydrogène pour un hydrotraitement de gazole de distillation directe. Cette augmentation est principalement due au fait que dans ces conditions opératoires, l'hydrodéoxygénation est favorisée par rapport aux réactions de décarboxylation et/ou décarbonylation.

L'analyse des produits effluents montre que le co-traitement de gazole de distillation directe et d'huile de colza permet d'obtenir des effluents avec un indice de cétane plus élevé, mals des propriétés à froid limites vis-à-vis de la spécification EN 590 des gazoles routiers (en particulier pour la température limite de filtrabilité (TLF), fixée à 0°C). Cependant ces propriétés sont grandement améliorées par rapport à celles de l'huile végétale de départ (TLF de 20°C environ) ou de l'effluent Issu de l'hydrotraitement seul de l'huile végétale (TLF de 20°C également).

En conclusion, les effluents obtenus par le co-traitement en une seule étape d'un gazole de distillation directe avec une huile végétale présentent de fortes valeurs d'indice de cétane mais pénalisent le pool gazole sur les spécifications de propriétés à froid, nécessitant l'emploi d'additifs dédiés.

Enfin, la réalisation d'un point retour avec une charge constituée à 100% de gazole de distillation directe permet de mesurer la désactivation du catalyseur due à l'utilisation d'une charge contenant de l'huile de colza.

Comme le montre le Tableau 1, les teneurs soufre et azote effluent sont plus élevées que celles obtenues à l'origine sur cette même charge. Ainsi, une désactivation de l'ordre de 5°C a été mesurée. Les moins bonnes performances du catalyseur conduiraient donc à augmenter la température d'opération rapidement et à terme à une diminution de la durée de cycle du catalyseur dans l'unité.

**Tableau 1 : Hydrotraitement en une étape d'un mélange d'huile de colza et de gazole de distillation directe**

| Charge | Gazole de distillation directe pur | Gazole de distillation direct en comélange avec l'huile de colza (95/5% poids) | Gazole de distillation direct en comélange avec l'huile de colza (85/15 % poids) | Gazole de distillation directe pur (point retour) |
|---|---|---|---|---|
| Conditions | 140 | 255 | 404 | 517 |
| Age catalyseur (h) | | | | |
| Densité | | | | |
| charge/ effluents (kg/m³) | 853,7/838,0 | 861,1 / 836,8 | 857,2/834,2 | 853,7/837,8 |
| Soufre | | | | |
| charge / effluents (mg/kg) | 13500/76 | 12950/400 | 11967/582 | 13500/162 |
| ΔT HDS (°C) | Base | -13 | -16 | -5 |
| Azote | 126/13 | 116/32 | 113/37 | 126/19 |
| charge / effluents (mg/kg) | | | | |
| Consommation en H₂ (% poids/charge) | 0,43 | 0,48 | 0,57 | 0,40 |
| Cétane | 56,6/59,2 | 55,6/59,1 | 53,7/60,1 | 56,6/58,8 |
| charge/effluent | | | | |
| Propriétés à froid | | | | |
| charge/effluent Température limite de filtrabilité (°C) | -3/-2 | -3/-2 | +1/+1 | -3/-2 |
| Point de trouble (°C) | +2/+1 | +1/+1 | +1/+1 | +2/+2 |

### Exemple 2 : Procédé de traitement de l'huile végétale seule

L'hydrotraitement d'une huile de colza qualité grade DNS a été réalisé dans une unité isotherme composée d'un lit fixe de type courant descendant contenant 50 cc de catalyseur de type NiMo/Al₂O₃ en chargement dense.

Les caractéristiques du gazole de distillation directe sont identiques à celles du gazole de l'Exemple 1. Après sulfuration in situ réalisée à 350 °C dans l'unité sous pression par addition de 2 % en poids de diméthyldisulfure au gazole de distillation directe, la charge a été modifiée pour une charge constituée à 100 % d'huile de colza. Le test d'hydrotraitement a ensuite été conduit dans les conditions opératoires suivantes pendant 150 h :
- Pression totale (MPa rel) : 4 et 2,5 MPa
- Température (°C) : 320, 300, 280
- H₂/HC (Nl/l): 320
- VVH (h⁻¹) : 1,6

La consommation en hydrogène ainsi que la quantité de CO, CO₂ formés sont reportées dans le Tableau 2.

**Tableau 2 : Hydrotraitement en deux étapes avec séparation Inter-étage d'une huile de colza qualité grade DNS**

| Charge | T = 320°C | T = 300°C | T = 300°C | T = 280°C |
|---|---|---|---|---|
| | P = 4 MPa | P = 4 MPa | P = 2,5 MPa | P = 2,5 MPa |
| Conversion des triglycérides (liaison C=O de l'ester bande IR à 1751 cm⁻¹) | 100% | 100% | 100% | <100% |
| Consommation H₂ (% poids/charge) | 5,7 | 4,8 | 3,7 | non mesurée |
| Rendements (% poids/charge) | | | | non mesurés |
| CO | 0,4 | 0,6 | 0,8 | |
| CO₂ | 5,3 | 6,4 | 7,8 | |
| H₂O | 12,2 | 10,2 | 7,5 | |
| C₃ | 1,5 | 1,5 | 1,5 | |

On constate lors de l'hydrotraitement d'une charge composée d'huile de colza de qualité DNS à 320°C sous 4 MPa (non conforme à l'invention) que la consommation d'hydrogène est très élevée puisqu'elle est de 5.7 % poids par rapport à la charge.

En outre, la production d'eau représente entre 7,5 et 12,2 % poids de la charge selon les conditions opératoires, ce qui entraîne une accélération des phénomènes de frittage du support des catalyseurs d'hydrotraitement telle que l'alumine.

La diminution de la température à 300°C ainsi que la diminution de la pression permettent d'abaisser cette consommation à 4.8 puis 3.7 % poids en favorisant les réactions de décarboxylation et de décarbonylation par rapport à la réaction d'hydrodéoxygénatlon. Ainsi, il apparaît plus avantageux dans le cas où la charge contient des huiles végétales d'opérer à plus basses températures et pressions que celles couramment utilisées dans le cas de l'hydrotraitement des gazoles afin de réduire la consommation en hydrogène du procédé.

### Exemple 3 : Analyse des catalyseurs usés ayant servi dans le cas des exemples 1 et 2

Les catalyseurs usés décrits dans l'Exemple 1 pour une charge constituée d'une coupe hydrocarbonée ne contenant pas d'huile végétale ainsi que pour une charge comprenant 15% d'huile végétale ont été analysés.

Les analyses élémentaires de ces catalyseurs après lavage au toluène à reflux et séchage 1h sous étude à vide sont reportées dans le Tableau 3. On constate que l'introduction d'huile de colza dans la charge accélère le cokage du catalyseur utilisé et que le ratio S/Mo qui caractérise la stabilité de la phase sulfure diminue. Le vieillissement du catalyseur est donc accéléré par la présence de l'huile végétale en co-mélange.

La surface spécifique de ces catalyseurs usés a également été mesurée par la méthode BET. On constate que l'Introduction d'huile de colza dans la charge entraîne une diminution de la surface spécifique des catalyseurs usés.

Les caractéristiques du catalyseur usé décrit dans l'Exemple 2 sont également reportées dans le Tableau 3. On constate que les tendances observées lors de l'hydrotraitement d'une charge contenant 15% d'huile de colza sont confirmées lorsqu'une charge constituée d'huile de colza pure est utilisée. Ainsi, la teneur en carbone du catalyseur usé de l'Exemple 2 est de 4,9% poids, son ratio S/Mo encore plus faible que celui des catalyseurs usés de l'Exemple 1 et la surface BET de 141 m²/g.

**Tableau 3 : Analyses élémentaires et surface spécifique des catalyseurs usés après hydrotraitement d'une charge hydrocarbonée, d'une charge contenant 15% d'huile de colza en une seule étape et d'une charge constituée uniquement d'huile de colza**

| Exemple illustré | % poids d'huile de colza dans le mélange | C (% poids) | H (% poids) | S/Mo (ratio molaire) | S_{BET} (m²/9) |
|---|---|---|---|---|---|
| 1 | 0 | 2,4 | 1,2 | 1,87 | 189 |
| 1 | 15 | 3,1 | 1,3 | 1,64 | 173 |
| 2 | 100 | 4,9 | 1,2 | 0,73 | 141 |

### Exemple 4 : Hydrotraitement d'un mélange d'huile de colza (qualité DNS) et de gazole de distillation atmosphérique dans deux unités avec séparation intermédiaire (conforme à l'invention)

L'hydrotraitement d'une charge constituée d'un mélange contenant des teneurs variables d'huile de colza a été réalisée en deux étapes. La première étape est constituée d'une hydrotraitement à 300°C sous 2,5 MPa sur catalyseur NiMo/alumine (50 cc). Un stripage des effluents est ensuite réalisé et la charge stripée est envoyée vers une seconde unité pilote dédiée à l'hydrodésulfuration profonde. Cette seconde unité pilote est opérée à 350°C sous 3,3 MPa sur catalyseur CoMo (50 cc). Les caractéristiques des effluents en sortie de cette seconde unité pilote sont reportées dans le Tableau 4.

**Tableau 4 : Hydrotraitement en deux étapes d'un mélange d'huile de colza et de gazole de distillation directe**

| Charge | Gazole de distillation directe pur | Gazole de distillation direct en comélange avec l'huile de colza (95/5 % poids) | Gazole de distillation direct en comélange avec l'huile de colza (85/15% poids) | Gazole de distillation directe pur (point retour) |
|---|---|---|---|---|
| Conditions Age catalyseur (h) | 130 | 263 | 410 | 513 |
| Densité | | | | |
| charge/ effluents (kg/m³) | 853,7/838,0 | 861,1/836,8 | 857,2/834,2 | 853,7/837,8 |
| Soufre | 13500/6 | 12950/10 | 11967/12 | 13500/7 |
| charge / effluents (mg/kg) Δ T HDS (°C) | | | | |
| | Base | - 4 | -6 | -3 |
| Azote | 126/2 | 116/4 | 113/5 | 12613 |
| charge / effluents (mg/kg) | | | | |
| Consommation en H₂ (% poids/charge) | 0,43 | 0,45 | 0,47 | 0,43 |
| Cétane | 56,6/59,3 | 55,6/60,9 | 53,7/65,3 | 56,6/57,5 |
| charge/effluent | | | | |
| Propriétés à froid | | | | |
| charge/effluent Température limite de filtrabilité (°C) | -3/-2 | -3/-2 | -1/0 | -3/-2 |
| Point de trouble (°C) | +2/+1 | 0/0 | +0/+1 | +2/+2 |

L'analyse des produits effluents montre que le co-traitement en deux étapes de gazole de distillation directe et d'huile de colza permet d'obtenir des effluents avec un indice de cétane plus élevé (+3 % avec un ratio 95/5; + 8,7 % avec un ratio à 85/15) comparativement au procédé à une seule étape de l'Exemple 1 (non conforme à l'invention).

Les propriétés à froid sont grandement améliorées par rapport à celles de l'huile végétale de départ (TLF de 20°C environ) ou de l'effluent issu de l'hydrotraitement seul de l'huile végétale (TLF de 20°C également).

Concernant les teneurs en soufre effluent, on constate que selon le procédé en deux étages conforme à l'invention, les teneurs soufre effluent sont en-dessous ou très proches de la limite des 10 mg/kg imposées par les nouvelles spécifications européennes en 2009. Le procédé en une étape de l'exemple 1 comparatif conduisait à l'obtention de gazoles ayant des teneurs soufre effluent supérieures ou égales à 400 mg/kg.

En conclusion, les effluents obtenus par le co-traitement d'un gazole de distillation directe avec une huile végétale avec séparation en deux étages constituent une amélioration très importante en vue de l'intégration des effluents dans le pool gazole aux spécifications soufre.

### Exemple 5 : Analyse des catalyseurs usés ayant servi dans le cas de l'Exemple 4 (conforme à l'invention)

De même que précédemment, les catalyseurs utilisés au cours dans le premier et dans le second lit catalytique ont été analysés après test. Les valeurs obtenues sont reportées dans le Tableau 5.

**Tableau 5 : Analyse élémentaire et surface spécifique des catalyseurs usés après hydrotraitement réalisé selon le procédé conforme à l'invention.**

| % poids d'huile de colza dans le mélange | Etage d'origine du catalyseur | C (% poids) | H (% poids) | S/Mo (ratio molaire) | S_{BET} (m²/g) |
|---|---|---|---|---|---|
| 0 | 1 | 2,4 | 1,2 | 1,87 | 185 |
| 0 | 2 | 2,1 | 1,0 | 1,93 | 187 |
| 5 | 1 | 2,6 | 1,3 | 1,82 | 179 |
| 5 | 2 | 2,4 | 1,3 | 1,86 | 187 |
| 15 | 1 | 3,1 | 1,3 | 1,72 | 173 |
| 15 | 2 | 2.4 | 1,2 | 1,83 | 185 |

Par comparaison avec l'Exemple 3, on constate que le co-traitement du mélange constitué de la coupe hydrocarbonée et de l'huile végétale conduit à un ratio molaire S/Mo plus proche de la stoechiométrie du composé MoS₂, ce qui montre que l'huile végétale pure déstabilise la phase active et onc la stabilité et le temps de vie du catalyseur sulfure.

D'autre part, par comparaison entre les catalyseurs usés de l'étape 1 et de l'étape 2, on constate que le catalyseur d'hydrodésulfuration ultime (étape 2) est préservé par le procédé selon l'invention, ce qui va permettre l'obtention de teneurs en soufre effluent conformes aux spécifications d'une part, et d'autre part ce qui va assurer une plus grande durée de cycle avec le même catalyseur tout en limitant la consommation en hydrogène.

### Exemple 6 : Hydrotraitement d'un mélange constitué d'huile de palme et de gazole de distillation atmosphérique dans deux unités avec séparation intermédiaire (conforme à l'invention)

L'hydrotraitement d'un mélange gazole et huile de palme a également été réalisé avec la même charge et dans les mêmes conditions celles de l'Exemple 4, conformément à l'invention.

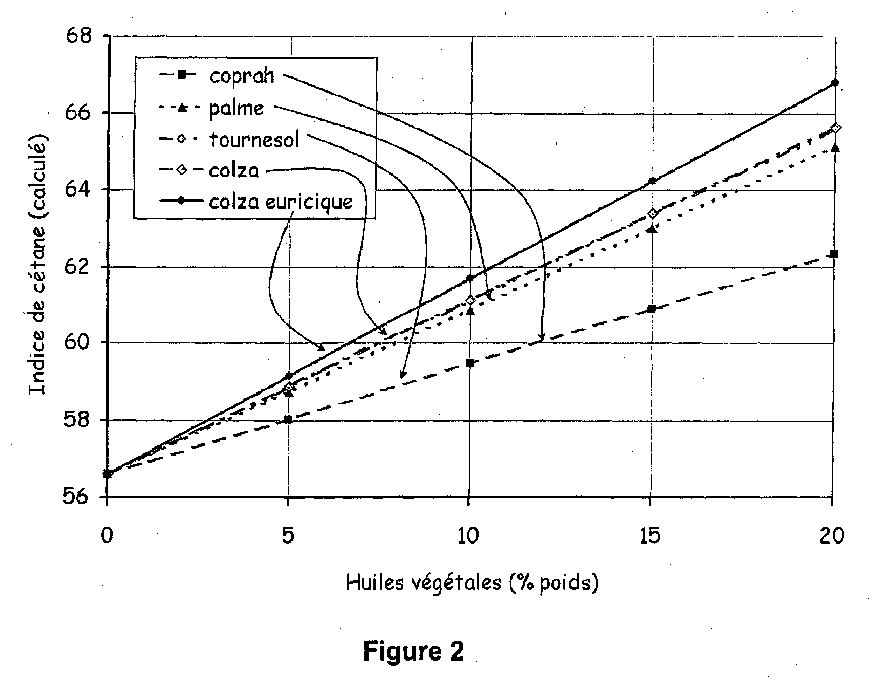

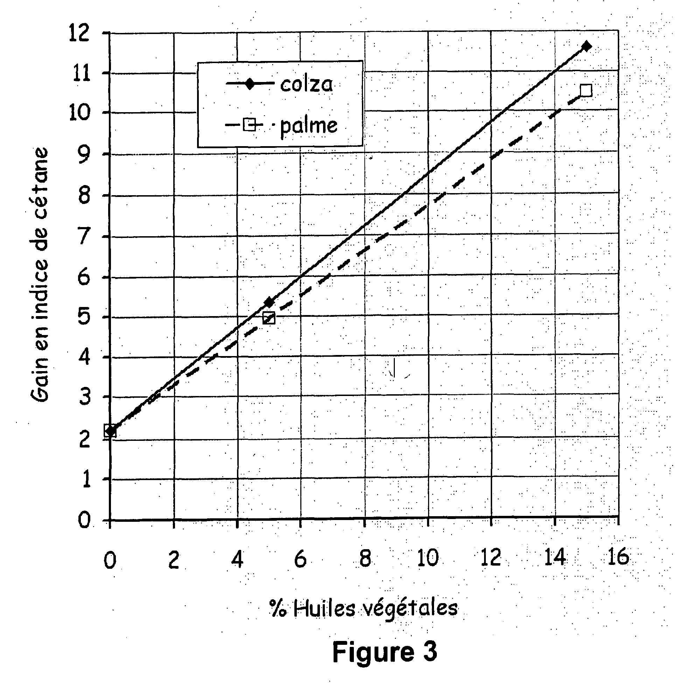

Les résultats en terme d'indice de cétane obtenus sont reportés sur la Figure 3. Les gains obtenus sont conformes aux gains calculés à partir des corrélations d'indices de cétane des huiles végétales reportées sur la Figure 2 et confirment l'avantage en terme d'indice de cétane du procédé selon l'invention qui permet également de limiter la désactivation du catalyseur et la consommation en hydrogène par rapport aux procédés d'hydrotraitement d'huiles végétales seules ou en une seule étape en co-mélange avec une charge hydrocarbonée de type gazole.

### Exemple 7 (comparatif) : Hydrotraitement d'un mélange d'huile de colza (qualité DNS) et de gazole de distillation atmosphérique dans deux unités avec séparation intermédiaire en se plaçant dans tes conditions décrites dans l'art antérieur (EP 1 693 432)

L'hydrotraitement d'une charge constituée d'un mélange contenant des teneurs variables d'huile de colza de qualité DNS a été réalisée en deux étapes. La première étape est constituée d'un hydrotraitement à 350°C sous 10 MPa sur catalyseur CoMo/alumine (50 cc). Un strlpage des effluents est ensuite réalisé et l'effluent stripé est envoyé vers une seconde unité pilote dédiée à l'hydrodésulfuration profonde. Cette seconde unité pilote est opérée à 350°C sous 7 MPa sur catalyseur CoMo (50 cc). Les caractéristiques des effluents en sortie de cette seconde unité pilote ainsi que les consommations globales d'hydrogènes sont reportées dans le Tableau 6.

**Tableau 6 : Hydrotraitement en deux étapes d'un mélange d'huile de colza et de gazole de distillation directe dans les conditions de l'art antérieur**

| Charge | Gazole de distillation directe pur | Gazole de distillation direct en comélange avec l'huile de colza (95 / 5 % poids) | Gazole de distillation direct en comélange avec l'huile de colza (85/15% poids) | Gazole de distillation directe pur (point retour) |
|---|---|---|---|---|
| Conditions Age catalyseur (h) | 150 | 263 | 410 | 513 |
| Densité | | | | |
| charge/ effluents (kg/m³) | 853,7/838,5 | 861,1/837,1 | 857,2/834,5 | 853,7/837,8 |
| Soufre | 13500 / non mesurable | 12950/non mesurable | 11967/2 | 13500/98 |
| charge / effluents (mg/kg) | | | | |
| ΔT HDS (°C) | Base | | | - 22°C |
| Consommation en H₂ (% poids/charge) | 0,44 | 0,72 | 1,29 | 0,43 |
| Célane | 56,6/59,5 | 55,6/60,3 | 53,7/62,7 | 56,6/56 |
| charge/effluent | | | | |

La consommation en hydrogène a été mesurée pour le co-traitement en deux étapes avec stripage de gazole de distillation directe et pour un mélange en proportion variable d'huile de colza dans les conditions décrites dans la demande de brevet EP 1 693 432 et a été reportée dans le tableau 6 : cette association engendre des consommations d'hydrogènes plus élevées (+173 % dans le cas d'un mélange (85 /15 % poids)) comparativement à l'exemple 4 (conforme à l'invention) en raison de condition d'hydrotraitement trop sévère dans la première étape. Cette augmentation est principalement due au fait que, dans ces conditions opératoires, l'hydrodéoxygénation est favorisée par rapport aux réactions de décarboxylation et/ou décarbonylation.

Les teneurs en soufre des effluents sont très faibles à ces conditions dans le cas d'un gazole de distillation directe (valeur non mesurable). Ceci révèle une pression partielle d'H₂S très insuffisante dans le second réacteur d'hydrotraitement, après stripage, ce qui Induit une dégradation rapide de la phase métallique et sa désactivation, comme le montrent les valeurs obtenues pour le point retour (22°C de désactivation). En outre, l'augmentation de la teneur en huiles végétales n'induit pas de dégradation de la performance de l'HDS, compte tenu des conditions opératoires très sévères et de l'élimination des sous produits de réaction comme le CO lors du stripage intermédiaire, comparativement à l'exemple 1 (non conforme à l'invention),

Les effluents présentent globalement des indices de cétane plus élevé comparativement au procédé à une seule étape de l'Exemple 1 (non conforme à l'Invention) mais plus faibles que ceux de l'Exemple 4 (conforme à l'invention), grâce à la sélectivité de la réaction de transformation des triglycérides.

En conclusion, les effluents obtenus par le co-traitement en deux étapes d'un gazole de distillation directe avec une huile végétale dans les conditions décrites dans l'art antérieur pénalisent le raffineur en raison de consommation très importante en hydrogène et de gain plus modeste en propriétés produit, comme le cétane, comparativement à l'exemple 4 conforme à l'invention. Ceci s'explique par des conditions trop sévères en hydrotraitement dans la première étape, induisant des réactions d'hydrodéoxygénation, et une pression en H₂S insuffisante lors de la seconde étape d'hydrotraitement.

Le catalyseur ayant travaillé lors de l'étape 2 en absence de soufre (désulfuration totale lors de la première étape), sa désactivation est très importante (voir tableau 7) :

**Tableau 7 :Analyse élémentaire et surface spécifique des catalyseurs usés après point retour après hydrotraitement réalisé en fonction du procédé utilisé.**

| | C (% poids) | H (% poids) | S/Mo (ratio molaire) | S_{BET} (m²/g) |
|---|---|---|---|---|
| 1 Étape | 2,4 | 1,2 | 1,87 | 189 |
| 2 étapes selon l'invention (Exemple 4) | 3,1 | 1,3 | 1,7 | 160 |
| 2 étapes selon conditions de l'art antérieur (EP1 693 432) 350°C | 6,2 | 1,2 | 0,4 | 140 |

## Revendications

1. Procédé d'hydrotraitement en co-traitement d'une charge constituée d'un mélange formé de 1 à 99 % en volume d'huile d'origine végétale ou animale et de 99 à 1% en volume d'une coupe pétrolière permettant d'obtenir une base carburant au moins contenant moins de 50 mg/kg de soufre comprenant:
a) une première étape d'hydrotraitement dans une unité HDT1 en lit fixe au moyen d'au moins un catalyseur comprenant au moins un métal du groupe VIB et/ou au moins un métal du groupe VIII du tableau périodique des éléments à une température de 190 à 350°C, une pression totale de 1 à 10 MPa, une vitesse spatiale horaire de 0,2 à 5 h⁻¹ et en présence de 50 à 2000 NI d'hydrogène par litre de charge ;
b) une étape de stripage intermédiaire permettant d'éliminer le monoxyde de carbone (CO), le dioxyde de carbone (CO₂), l'eau (H₂O), le sulfure d'hydrogène (H₂S) et l'ammoniaque (NH₃) formés lors de la première étape d'hydrotraitement;
c) une deuxième étape d'hydrotraitement dans une unité HDS2, opérant dans des conditions plus sévères que l'unité HDT1, en lit fixe au moyen d'au moins un catalyseur comprenant au moins un métal du groupe VIB et/ou au moins un métal du groupe VIII du tableau périodique des éléments à une température de 250 à 440°C, une pression totale de 1 à 25 MPa, une vitesse spatiale horaire de 0,2 à 4h⁻¹ et en présence de 50 à 2000 NI d'hydrogène par litre de charge.

2. Procédé selon la revendication 1 dans lequel l'hydrogène est introduit à contre-courant dans l'unité HDT1.

3. Procédé selon l'une des revendications 1 à 2 selon lequel chaque étape comprend un ou plusieurs réacteurs et/ou un ou plusieurs lits catalytiques.

4. Procédé selon l'une des revendications précédentes dans lequel ledit mélange à co-traiter est constitué de 1 à 50% d'huile d'origine végétale ou animale et de 99 à 50% de coupe pétrolière.

5. Procédé selon l'une des revendications précédentes dans lequel ladite huile est une huile végétale constituée majoritairement d'acides gras sous forme de triglycérides ayant de longues chaînes alkyles comprenant de 8 à 24 atomes de carbone.

6. Procédé selon la revendication 5 dans lequel l'huile végétale est choisie parmi l'huile de colza, de colza érucique, de soja, de tournesol ou de tournesol oléique, de palme, de coprah et de palmiste ou un mélange des ces huiles et de leurs dérivés.

7. Procédé selon l'une des revendications précédentes dans lequel la coupe pétrolière est une fraction hydrocarbonée dont le point d'ébullition est compris entre 130°C et 410°C.

8. Procédé selon la revendication 7 dans lequel la fraction hydrocarbonée comprend une coupe gazole ou diesel.

9. Procédé selon la revendication 8 dans lequel la coupe gazole provient de distillation directe, du craquage catalytique ou d'un procédé de conversion tel que la cokéfaction, la viscoréduction ou l'hydroconversion de résidus.

10. Procédé selon l'une des revendications précédentes dans lequel le catalyseur a une formulation de type cobalt-molybdène (CoMo), nickel-molybdène (NiMo) ou nickel-tungstène (NiW).

11. Procédé selon la revendication 10 dans lequel le catalyseur comprend en outre du phosphore, du bore et/ou du fluor.

12. Procédé selon l'une des revendications précédentes selon lequel chaque étape réactionnelle utilise un catalyseur identique ou différent.

13. Procédé selon l'une des revendications précédentes dans lequel l'huile est mélangée avec la coupe pétrolière après préchauffage de ladite coupe pétrolière en présence d'hydrogène par passage dans un échangeur de chaleur charge/effluent puis dans un four de préchauffe.

14. Procédé selon l'une des revendications précédentes dans lequel l'huile est mélangée avec la coupe pétrolière en présence d'hydrogène après préchauffage de ladite coupe pétrolière par passage dans un échangeur de chaleur charge/effluent, le mélange obtenu passant ensuite éventuellement dans un four de préchauffe.

15. Procédé selon l'une des revendications précédentes dans lequel l'huile est mélangée avec la coupe pétrolière en présence d'hydrogène avant préchauffage.

16. Procédé selon la revendication 15 dans lequel le mélange obtenu est préchauffé par passage dans un échangeur de chaleur charge/effluent puis éventuellement dans un four de préchauffage.

17. Procédé selon l'une des revendications précédentes le mélange de l'huile et de la coupe hydrocarbonée est fait préalablement à l'introduction d'hydrogène.

18. Procédé selon l'une des revendications 1 à 17 dans lequel le mélange de l'huile d'origine végétale ou animale et de la coupe hydrocarbonée est fait en présence d'hydrogène.

19. Procédé selon l'une des revendications précédentes dans lequel l'hydrogène introduit dans l'étape a) est constitué en proportion variant de 1 à 100% en volume de l'hydrogène de recycle provenant de l'unité d'hydrodésulfuration HDS2.

## Patentansprüche

1. Verfahren zur gemeinsam durchgeführten Hydrobehandlung einer Charge, die aus einer Mischung besteht, welche aus 1 bis 99 Volumen-% an Öl pflanzlicher oder tierischer Herkunft und 99 bis 1 Volumen-% einer Erdölfraktion besteht, wobei es ermöglicht wird, eine Brennstoffgrundlage zu erhalten, die weniger als 50 mg/kg an Schwefel enthält, umfassend:
a) einen ersten Schritt der Hydrobehandlung in einer HDT1-Einheit im Festbett mittels mindestens eines Katalysators, der mindestens ein Metall der Gruppe VIB und/oder mindestens ein Metall der Gruppe VIII des Periodensystems der Elemente bei einer Temperatur von 190 bis 350 °C, einem Gesamtdruck von 1 bis 10 MPa, einer stundenbezogenen Raumgeschwindigkeit von 0,2 bis 5 h⁻¹ und in Gegenwart von 50 bis 2000 NI an Wasserstoff pro Liter an Charge umfasst;
b) einen Zwischenschritt der Strippung, der es ermöglicht, das Kohlenmonoxid (CO), das Kohlendioxid (CO₂), das Wasser (H₂O), den Schwefelwasserstoff (H₂S) und den gelösten Ammoniak (NH₃), welche beim ersten Hydrobehandlungsschritt gebildet werden, zu entfernen;
c) einen zweiten Schritt der Hydrobehandlung in einer HDS2-Einheit, die unter strengeren Bedingungen als die Einheit HDT1 betrieben wird, im Festbett mittels mindestens eines Katalysators, der mindestens ein Metall der Gruppe VIB und/oder mindestens ein Metall der Gruppe VIII des Periodensystems der Elemente bei einer Temperatur von 250 bis 440 °C, einem Gesamtdruck von 1 bis 25 MPa, einer stundenbezogenen Raumgeschwindigkeit von 0,2 bis 4 h⁻¹ und in Gegenwart von 50 bis 2000 NI an Wasserstoff pro Liter an Charge umfasst.

2. Verfahren nach Anspruch 1, wobei der Wasserstoff im Gegenstrom in die Einheit HDT1 eingeleitet wird.

3. Verfahren nach einem der Ansprüche 1 bis 2, gemäß welchem jeder der Schritte einen oder mehreren Reaktoren und/oder ein oder mehrere Katalysatorbetten umfasst.

4. Verfahren nach einem der vorhergehenden Ansprüche, wobei die gemeinsam zu behandelnde Mischung aus 1 bis 50 % an Öl pflanzlicher oder tierischer Herkunft und aus 99 bis 50 % an Erdölfraktion besteht.

5. Verfahren nach einem der vorhergehenden Ansprüche, wobei es sich bei dem Öl um ein pflanzliches Öl handelt, das überwiegend aus Fettsäuren in Triglyceridform besteht, welche lange Alkylketten mit 8 bis 24 Kohlenstoffatomen haben.

6. Verfahren nach Anspruch 5, wobei das pflanzliche Öl aus Rapsöl, erucasäurehaltigem Rapsöl, Sojaöl, Sonnenblumenöl oder ölsäurereichem Sonnenblumenöl, Palmöl, Kokosöl und Palmkernöl oder einer Mischung dieser Öle und ihrer Derivate ausgewählt ist.

7. Verfahren nach einem der vorhergehenden Ansprüche, wobei es sich bei der Erdölfraktion um eine Kohlenwasserstofffraktion mit einem Siedepunkt im Bereich von 130°C bis 410°C handelt.

8. Verfahren nach Anspruch 7, wobei die Kohlenwasserstofffraktion eine Gasöl- oder Dieselfraktion umfasst.

9. Verfahren nach Anspruch 8, wobei die Gasölfraktion aus der direkten Destillation, dem katalytischen Cracken oder einem Umwandlungsverfahren wie etwa der Verkokung, dem Visbreaking oder der hydrierenden Umwandlung von Rückständen stammt.

10. Verfahren nach einem der vorhergehenden Ansprüche, wobei der Katalysator eine Formulierung des Typs Kobalt-Molybdän (CoMo), Nickel-Molybdän (NiMo) oder Nickel-Wolfram (NiW) hat.

11. Verfahren nach Anspruch 10, wobei der Katalysator darüber hinaus Phosphor, Bor und/oder Fluor umfasst.

12. Verfahren nach einem der vorhergehenden Ansprüche, gemäß welchem bei jedem der Reaktionsschritte ein identischer oder verschiedenartiger Katalysator verwendet wird.

13. Verfahren nach einem der vorhergehenden Ansprüche, wobei das Öl mit der Erdölfraktion vermischt wird, nachdem die Erdölfraktion in Gegenwart von Wasserstoff vorgeheizt wurde, indem sie zunächst in einen Charge/Abgasstrom-Wärmetauscher und dann in einen Vorheizofen geleitet wurde.

14. Verfahren nach einem der vorhergehenden Ansprüche, wobei das Öl mit der Erdölfraktion in Gegenwart von Wasserstoff vermischt wird, nachdem die Erdölfraktion vorgeheizt wurde, indem sie in einen Charge/Abgasstrom-Wärmetauscher geleitet wurde, woraufhin die erhaltene Mischung möglicherweise in einen Vorheizofen geleitet wird.

15. Verfahren nach einem der vorhergehenden Ansprüche, wobei das Öl vor dem Vorheizen mit der Erdölfraktion in Gegenwart von Wasserstoff vermischt wird.

16. Verfahren nach Anspruch 15, wobei die erhaltene Mischung vorgeheizt wird, indem sie in einen Charge/Abgasstrom-Wärmetauscher und dann möglicherweise in einen Vorheizofen geleitet wird.

17. Verfahren nach einem der vorhergehenden Ansprüche, wobei die Mischung aus dem Öl und der Kohlenwasserstofffraktion hergestellt wird, bevor der Wasserstoff eingeleitet wird.

18. Verfahren nach einem der Ansprüche 1 bis 17, wobei die Mischung aus dem Öl pflanzlicher oder tierischer Herkunft und der Kohlenwasserstofffraktion in Gegenwart von Wasserstoff hergestellt wird.

19. Verfahren nach einem der vorhergehenden Ansprüche, wobei der Wasserstoff, welcher in Schritt a) eingeleitet wird, zu Anteilen, die zwischen 1 und 100 Volumen-% schwanken können, aus Rückführungswasserstoff besteht, welcher aus der Hydroentschwefelungseinheit HDS2 stammt.

## Claims

1. A method of hydrotreating in co-treatment a feed made up of a mixture consisting of 1 to 99 % by volume of an oil of vegetable or animal origin and of 99 to 1 % by volume of a petroleum cut allowing to obtain a fuel base at least containing less than 50 mg/kg sulfur, comprising:
a) a first hydrotreatment stage in a fixed-bed plant HDT1 by means of at least one catalyst comprising at least one metal from group VIB and/or at least one metal from group VIII of the periodic table of elements, at a temperature of 190°C to 350°C, a total pressure of 1 to 10 MPa, an hourly space velocity of 0.2 to 5 h⁻¹ and in the presence of 50 to 2000 Nl hydrogen per liter of feed,
b) an intermediate stripping stage allowing to eliminate the carbon monoxide (CO), the carbon dioxide (CO₂), the water (H₂O), the hydrogen sulfide (H₂S) and the ammonia (NH₃) formed during the first hydrotreatment stage,
c) a second hydrotreatment stage in a fixed-bed plant HDS2, plant HDS2 operating under more severe conditions than plant HDT1, by means of at least one catalyst comprising at least one metal from group VIB and/or at least one metal from group VIII of the periodic table of elements, at a temperature of 250°C to 440°C, a total pressure of I to 25 MPa, an hourly space velocity of 0.2 to 4 h⁻¹ and in the presence of 50 to 2000 Nl hydrogen per liter of feed.

2. A method as claimed in claim 1, wherein the hydrogen is fed in a counter-current stream into plant HDT1.

3. A method as claimed in any one of claims 1 and 2, wherein each stage comprises one or more reactors and/or one or more catalyst beds.

4. A method as claimed in any one of the previous claims, wherein said mixture to be co-treated consists of 1 to 50 % oil of vegetable or animal origin and of 99 to 50 % petroleum cut.

5. A method as claimed in any one of the previous claims, wherein said oil is a vegetable oil predominantly consisting of fatty acids in form of triglycerides having long alkyl chains comprising 8 to 24 carbon atoms.

6. A method as claimed in claim 5, wherein the vegetable oil is selected from among the following oils: rape, erucic rape, soybean, sunflower or oleic sunflower, palm, copra and palm-nut oil, or a mixture of these oils and their derivatives.

7. A method as claimed in any one of the previous claims, wherein the petroleum cut is a hydrocarbon fraction whose boiling point ranges between 130°C and 410°C.

8. A method as claimed in claim 7, wherein the hydrocarbon fraction comprises a gas oil or diesel cut.

9. A method as claimed in claim 9, wherein the gas oil cut is obtained from straight distillation, catalytic cracking or a conversion process such as coking, visbreaking or hydroconversion of residues.

10. A method as claimed in any one of the previous claims, wherein the catalyst has a cobalt-molybdenum (CoMo), nickel-molybdenum (NiMo) or nickel-tungsten (NiW) type formulation.

11. A method as claimed in claim 10, wherein the catalyst further comprises phosphorus, boron and/or fluorine.

12. A method as claimed in any one of the previous claims, wherein each reaction stage uses an identical or different catalyst.

13. A method as claimed in any one of the previous claims, wherein the oil is mixed with the petroleum cut after preheating said petroleum cut in the presence of hydrogen by passage through a feed/effluent heat exchanger, then through a preheat furnace.

14. A method as claimed in any one of the previous claims, wherein the oil is mixed with the petroleum cut in the presence of hydrogen after preheating said petroleum cut by passage through a feed/effluent heat exchanger, the mixture obtained being then possibly passed through a preheat furnace.

15. A method as claimed in any one of the previous claims, wherein the oil is mixed with the petroleum cut in the presence of hydrogen prior to preheating.

16. A method as claimed in claim 15, wherein the mixture obtained is preheated by passage through a feed/effluent heat exchanger, then possibly through a preheat furnace.

17. A method as claimed in any one of the previous claims, wherein mixing the oil and the hydrocarbon cut is carried out before introduction of the hydrogen.

18. A method as claimed in any one of claims 1 to 17, wherein mixing the oil of vegetable or animal origin and the hydrocarbon cut is carried out in the presence of hydrogen.

19. A method as claimed in any one of the previous claims, wherein the hydrogen introduced in stage a) consists, in a proportion ranging from 1 to 100 % by volume, of the recycle hydrogen from hydrodesulfurization plant HDS2.
